Europäisches Patentamt

European Patent Office

Office européen des brevets

(11) Veröffentlichungsnummer: **0 443 308 A1**

(12) # EUROPÄISCHE PATENTANMELDUNG

(21) Anmeldenummer: **90890045.9**

(22) Anmeldetag: **21.02.90**

(51) Int. Cl.5: **B29C 67/14**

(43) Veröffentlichungstag der Anmeldung:
**28.08.91 Patentblatt 91/35**

(84) Benannte Vertragsstaaten:
**AT DE ES FR GB IT**

(71) Anmelder: **GFM Gesellschaft für Fertigungstechnik und Maschinenbau Gesellschaft m.b.H.**
**Ennserstrasse 14**
**A-4403 Steyr(AT)**

(72) Erfinder: **Blaimschein, Gottfried, Dipl.-Ing.**
**Arnhalmweg 33**
**A-4407 Steyr(AT)**

(74) Vertreter: **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz(AT)**

(54) **Vorrichtung zum Auflegen von ein- oder beidseits folienbedecktem Bandmaterial.**

(57) Eine Vorrichtung zum Auflegen von ein- oder beidseits folienbedecktem Bandmaterial (1) auf eine Arbeitsfläche (2) weist einen über die Arbeitsfläche (2) verfahrbaren Legeschlitten (3) auf, der eine Legeeinheit (4) aus einer Materialspenderrolle (7), einer auf die Arbeitsfläche (7) niederdrückbaren Anpreßrolle (9) und einer das Material querschneidenden Schneideinrichtung (19) umfaßt, wobei das Bandmaterial (1) von der Spenderrolle (7) vorzugsweise über Umlenkrollen (8) zur Anpreßrolle (9) läuft und die arbeitsflächenabgewandte Deckfolie (1b) des Materials beim Auflegen über die Anpreßrolle (9) vom Band (1) abziehbar und auf eine Wickeltrommel (12) aufwickelbar ist.

Um ein rationelles und funktionssicheres Verlegen des Bandmaterials zu gewährleisten, liegt die Schneideinrichtung (19) in Bandlegerichtung hinter der Anpreßrolle (9) und ist die Legeeinheit (4) bei Legebeginn nach Aufsetzen der Andrückrolle (9) mit dem Band (1) auf der Arbeitsfläche (2) zuerst um einen dem Abstand zwischen Schneideinrichtung (19) und Anpreßrolle (9) angepaßten Legeweg zurückbewegbar, bevor der Legevorgang durch Vorfahren des Legeschlittens (3) bzw. der Legeeinheit (4) unter gleichzeitigem Bandabzug und Abrollen der Anpreßrolle (9) beginnt.

FIG.1

Die Erfindung bezieht sich auf eine Vorrichtung zum Auflegen von ein- oder beidseits folienbedecktem Bandmaterial, insbesondere Prepregs, auf eine Arbeitsfläche, mit einem über die Arbeitsfläche verfahrbaren Legeschlitten, der eine Legeeinheit aus einer Materialspenderrolle, einer auf die Arbeitsfläche niederdrückbaren Anpreßrolle und einer das Material querschneidenden Schneideinrichtung umfaßt, wobei das Bandmaterial von der Spenderrolle vorzugsweise über Umlenkrollen zur Anpreßrolle läuft und die arbeitsflächenabgewandte Deckfolie des Materials beim Auflegen über die Anpreßrolle und gegebenenfalls die arbeitsflächenzugewandte Deckfolie zwischen Spenderrolle und Anpreßrolle über eine Abnahmerolle vom Band abziehbar und jeweils auf eine Wickeltrommel aufwickelbar sind.

Mit solchen Vorrichtungen lassen sich Bänder größerer Breite ein- oder mehrlagig auf einen Arbeitstisch zur Bearbeitung auflegen, sie dienen aber auch zum Zusammensetzen von Werkstücken aus streifenförmigem Material für eine entsprechende Weiterver- und -bearbeitung. Das Bandmaterial muß daher dem jeweiligen Verwendungszweck gemäß geschnitten und flach aufgelegt werden können, wozu es bisher bereits auf Legeschlitten montierte Legeeinheiten gibt. Dabei kann das Material schon vorgeschnitten und vom Abfall befreit in die Legeeinheit eingebracht werden, durch die es dann mittels Trägerfolien und auf Grund einer geeigneten Schnittstellenerkennung in die gewünschte Position auf der Arbeitsfläche ablegbar ist, was allerdings den Mehraufwand einer separaten Schneidanlage erfordert und dadurch wegen der zweifachen Materialeinspannung auch zeitraubend ist. Es ist weiters bekannt, das Bandmaterial gleich in die Legeeinheit einzuspannen und durch die Legeeinheit sowohl schneiden als auch auflegen zu lassen. Bisher wird dabei das Band von einer Spenderrolle durch eine Schneidvorrichtung und dann erst zur Anpreßrolle geführt, welche Schneideinrichtung das Bandmaterial querschneiden muß, ohne die als Trägerfolie dienende Deckfolie zu durchtrennen, wodurch häufig Schwierigkeiten entstehen und Störungen auf Grund einer Folienbeschädigung oder eines Folienrisses auftreten. Da außerdem die Schneidstelle nicht mit der Ablegestelle zusammenfällt, muß entweder das Band beim Schneiden angehalten und damit auch der Legevorgang unterbrochen werden, oder die Schneideinrichtung muß einen mit dem Band mitfahrenden Schneidschlitten od.dgl. aufweisen, was nicht nur aufwendig und platzraubend ist, sondern auch die mögliche Legegeschwindigkeit beschränkt.

Der Erfindung liegt daher die Aufgabe zugrunde, diese Mängel zu beseitigen und eine Vorrichtung der eingangs geschilderten Art zu schaffen, die auf rationelle Weise ein funktionssicheres Legen und Schneiden unterschiedlichsten Bandmaterials gewährleistet.

Die Erfindung löst diese Aufgabe dadurch, daß die Schneideinrichtung in Bandlegerichtung hinter der Anpreßrolle liegt und die Legeeinheit bei Legebeginn nach Aufsetzen der Andrückrolle mit dem Band auf der Arbeitsfläche zuerst um einen dem Abstand zwischen Schneideinrichtung und Anpreßrolle angepaßten Legeweg zurückbewegbar ist, bevor der eigentliche Legevorgang durch Vorfahren des Legeschlittens bzw. der Legeeinheit unter gleichzeitigem Bandabzug und Abrollen der Anpreßrolle beginnt. Die Nachordnung der Schneideinrichtung gegenüber der Anpreßrolle erlaubt es, die Schnittstelle in den Ablegebereich zu verlegen und das Band nach dem Auflegen bei ohnehin stehendem Schlitten schneiden zu können. Bei Beginn eines jeden Legevorganges muß dann, um ein einwandfreies Auflegen und Ablegen des Bandes auch im Bereich zwischen Andrückrolle und Schneideinrichtung zu gewährleisten, die Legeeinheit um diesen Bereich zurückfahren, um mit Hilfe der Anpreßrolle auch das nach hinten abstehende Band auf die Auflagefläche andrücken zu können. Dieser kurze Rückweg bedeutet kaum eine Beeinträchtigung im Programmablauf der Ablegesteuerung, verzögert das Auflegen nur unwesentlich, ermöglicht aber eine sehr aufwandsarme und platzsparende Konstruktion der Legeeinheit, da weder eine vorrichtungsfremde eigene Schneidanlage noch ein beim Schneiden mit dem Band mitfahrendes Schneidgerät notwendig ist und die Schneideinrichtung auch keine Unterbrechung des eigentlichen Legevorganges erzwingt.

Um das Bandmaterial einwandfrei auflegen zu können, wird der Anpreßrolle ein heb- und senkbarer Niederstreifer, vorzugsweise eine Niederstreiferbürste vorgeordnet. Entspricht dabei der Abstand zwischen Schneideinrichtung und Anpreßrolle etwa dem zwischen Niederstreifer und Anpreßrolle, läßt sich die Wirkung des Niederstreifers rationell an das Ablegeverfahren des Bandmaterials anpassen. Durch ein entsprechend gesteuertes Anheben des Niederhalters ist nämlich im Endbereich des jeweiligen Legeschrittes der Einsatzbereich des Niederhalters auf den tatsächlichen Legeweg abgestimmt, so daß sich das Band am Legeschrittende um die Anpreßrolle spannt und dann beim Abheben des Bandes ein Lockerwerden oder Durchhängen des Materials verhindert wird.

Um ein genaues Legen des Bandmaterials zu gewährleisten und keine Störungen in der Beschleunigungs- und Verzögerungsphase befürchten zu müssen, weisen die der Anpreßrolle zugeordnete Wickeltrommel und/oder die Spenderrolle umkehrbare Drehantriebe auf, so daß die Bandmaterialbewegung über die durchgehend auf die Wickeltrommel aufgewickelte, als Trägerfolie dienende Deckfolie an den eigentlichen Legevorgang bzw. an die Legebewegung des Legeschlittens exakt angepaßt werden kann und sowohl beim Rückfahren als auch beim Vorwärtsfahren keine Faltenbildungen, Durchhänge usw. befürchtet zu werden brauchen.

Günstig ist es dabei, wenn der Drehantrieb von der der Anpreßrolle zugeordneten Wickeltrommel und/oder von der Spenderrolle im Sinne einer mit der Bewegung des Legeschlittens synchronen Bandablegegeschwindigkeit ansteuerbar ist. Durch einen solchen Gleilauf von Bandabzug und Schlittenbewegung tritt beim Auflegen des Bandes auf die Arbeitsfläche wegen der fehlenden Relativbewegung keine zusätzliche Bandbelastung auf und es wird auch unter schwierigen Verhältnissen ein ordnungsgemäßer Legevorgang sichergestellt. So können auch Bänder mit glatter Oberfläche, die auf der Arbeitsfläche oder beim Übereinanderlegen untereinander nicht haften, ebenfalls einwandfrei aufgelegt werden. Zur Antriebssteuerung braucht dazu lediglich die Bandgeschwindigkeit, sei es über einen Weggeber für die Anpreßrolle oder einen anderen Geschwindigkeitsfühler, erfaßt und an die meist vorgegebene Schlittengeschwindigkeit angepaßt zu werden, was einer ohnehin vorhandenen Steuerungseinrichtung keinerlei Schwierigkeiten bereitet.

Nach einer besonders vorteilhaften Ausgestaltung der Erfindung ist die Legeeinheit mit einer in Bandlegerichtung hinter der Schneideinrichtung angeordneten Werkstück-Markierungseinrichtung ausgestattet, so daß das zur nachfolgenden Bearbeitung aufgelegte Bandmaterial vor der eigentlichen Bearbeitung im gewünschten Sinn markiert werden kann. Da die Legeeinheit nach dem Ablegen des Bandmaterials beliebig positionierbar ist, läßt sich die Markierung an jeder gewünschten Werkstückstelle anbringen, beispielsweise vorgedruckte Etiketten aufkleben, Tintenmarkierungen anbringen od.dgl., was ein nachträgliches Markieren über eigene zusätzliche Vorrichtungen erspart und den Bearbeitungsablauf vom Auflegen des Materials bis zum eigentlichen Bearbeiten, Markieren und Abnehmen rationalisiert.

In der Zeichnung ist der Erfindungsgegenstand rein schematisch an Hand eines Ausführungsbeispiels näher veranschaulicht, und zwar zeigen
    Fig. 1 eine erfindungsgemäße Vorrichtung in teilgeschnittener Seitenansicht und die
    Fig. 2 - 4 das Ablegen von Bandmaterial mit Hilfe dieser Vorrichtung an Hand dreier Ablegephasen.

Um auf rationelle Weise Bandmaterial 1 auf die Arbeitsfläche 2 eines nicht weiter dargestellten Arbeitstisches ablegen zu können, ist eine auf einem über die Arbeitsfläche 2 verfahrbaren Legeschlitten 3 aufgebaute Legeeinheit 4 vorgesehen. Der Legeschlitten 3 setzt sich dabei aus einem Längsschlitten 3a und einem Querschlitten 3b zusammen, wobei am Querschlitten 3b ein die Legeeinheit 4 aufnehmender Legekopf 3c in Vertikalführungen 5 heb- und senkbar und gegebenenfalls, wie mit den Schwenklagern 6 angedeutet, auch um eine Vertikalachse schwenkverstellbar abgestützt ist.

Die Legeeinheit 4 umfaßt eine Spenderrolle 7 für das aufzulegende Bandmaterial 1, Umlenkrollen 8 zur Bandmaterialführung und eine Anpreßrolle 9 zum Andrücken des aufgelegten Bandes an die Arbeitsfläche 2, wobei zur Abnahme vorhandener Deckfolien 1a, 1b des Bandmaterials 1 einerseits eine mit einer der Umlenkrollen 8 zusammenwirkende Abnahmerolle 10 und eine zugehörige, über einen Drehantrieb 13 antreibbare Wickeltrommel 11 und anderseits eine ebenfalls antreibbare, mit der Anpreßrolle 9 selbst zusammenwirkende Wickeltrommel 12 vorgesehen sind. Die arbeitsflächenabgewandte Deckfolie 1b dient dabei als Trägerfolie und die Wickeltrommel 12 sowie die Spenderrolle 7 besitzen umkehrbare Drehantriebe 14, 15 oder Bremseinrichtungen 16, 17, so daß die Antriebe bzw. der Antrieb und die Bremseinrichtungen während des Legevorganges unabhängig von der Laufrichtung des Bandes stets für eine gleichbleibende Bandspannung sorgen können, die über eine Tänzerrolle 18 od.dgl. Spannungskontrolleinrichtung überwacht wird.

Der Anpreßrolle 9 ist zum Querschneiden des Bandmaterials 1 eine Schneideinrichtung 19 nachgeordnet und etwa mit gleichem Abstand eine Niederhalterbürste 20 vorgeordnet, wodurch nicht nur ein einwandfreies Auflegen des Bandmaterials 1 auf der Arbeitsfläche 2 gewährleistet ist, sondern auch ein Schneiden des Bandmaterials im Ablegebereich.

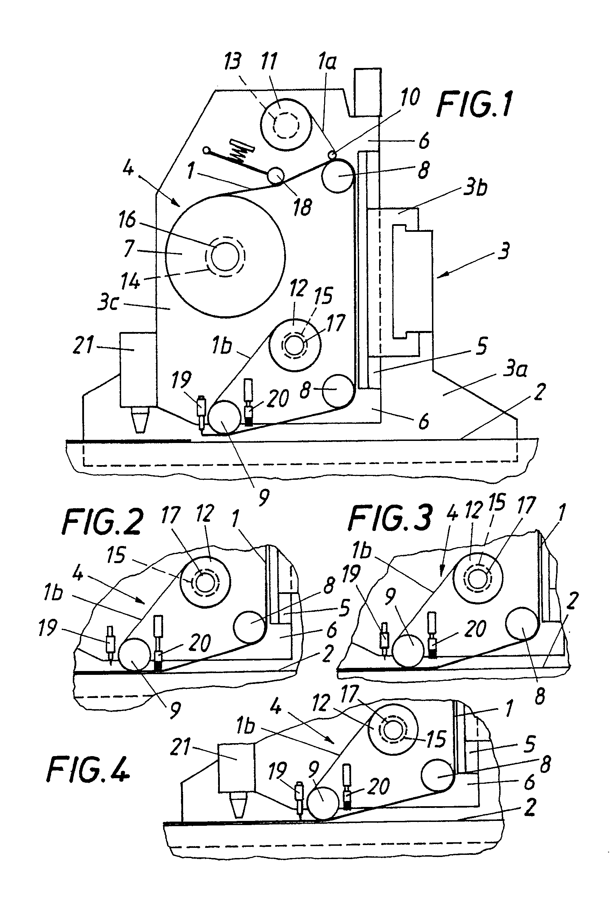

Soll nun Bandmaterial 1 verlegt werden, wird die Legeeinheit 4 mit dem Legekopf 3c auf die Arbeitsfläche 2 abgesenkt und das Band 1 bei gleichzeitigem Abzug von der Spenderrolle 7 durch eine entsprechende Schlittenbewegung abgelegt, wobei die abgesenkte Niederstreiferbürste 20 das Bandmaterial flach ausbreitet und die Anpreßwalze 9 den erforderlichen Auflegedruck erzeugt. Da während des Bandabzuges die eine Deckfolie 1a durch die Wickeltrommel 11 bereits vor der Niederhalterbürste 20 abgenommen wurde, kommt das freie Material, beispielsweise Prepreg-Material, auf die Arbeitsfläche oder die bereits vorher verlegte Materialschicht zu liegen und während des Andrückens des Materials mit der Anpreßrolle 9 wird nicht nur für die entsprechende Klebeverbindung des Materials mit der Unterlage gesorgt, sondern auch das Ablösen der als Trägerfolie dienenden anderen Deckfolie 1b, die auf die Wickeltrommel 12 aufgewickelt wird. (Fig. 2). Knapp vor Ende des Legevorganges wird die Niederhalterbürste 20 angehoben (Fig. 3) und der Legeschlitten 3 nur mehr so weit vorgefahren, bis die Anpreßrolle 9 das Ende des noch vom Niederhalter glattgestriften Bandmaterials erreicht (Fig. 4). Diese Position wird so angesteuert, daß die Schneidvorrichtung 19 nun genau an der richtigen Schnittstelle zu liegen kommt und das Band wunschgemäß durchtrennen kann. Sobald das Band abgelängt ist, wird durch Anheben der Anpreßrolle 9 und durch kurzen Vorschub der Legeeinheit 4 das nicht abgelegte Band von der Arbeitsfläche 2 abgehoben (Stellung gemäß Fig. 1) und der Legekopf 3c zum Verfahren des Legeschlittens 3 angehoben, so daß der Schlitten 3 schnell in die neue Position, beispielsweise in die Ausgangspostion für ein neues Legen, verfahren werden kann. Hier bei Beginn des neuen Legevorganges wird der Legekopf 3c wieder in Legehöhe abgesenkt und die Anpreßrolle 9 gegen die Arbeitsfläche 2 niedergedrückt. Vor dem eigentlichen Legebeginn erfolgt sodann ein Rückverfahren des Legeschlittens 3, bis die Anpreßrolle 9 den zwischen Anpreßrolle 9 und Schneideinrichtung 19 freien Bandendbereich gegen die Arbeitsfläche 2 oder eine entsprechende Unterlage angedrückt hat, und erst dann erfolgen das Absenken der Niederstreiferbürste 20 und das Auflegen des neuen Bandabschnittes durch Vorwärtsfahren des Legeschlittens 3 (Fig. 2).

Ist am Legekopf 3c hinter der Schneideinrichtung 19 eine Markierungseinrichtung 21 vorgesehen, die auf das abgelegte Bandmaterial Etiketten aufdrückt oder andere Markierungen anbringt, läßt sich rationell die Legevorrichtung auch zum Markieren der zu bearbeitenden Werkstücke nützen.

## Patentansprüche

1. Vorrichtung zum Auflegen von ein- oder beidseits folienbedecktem Bandmaterial (1), insbesondere Prepregs, auf eine Arbeitsfläche (2), mit einem über die Arbeitsfläche (2) verfahrbaren Legeschlitten (3), der eine Legeeinheit (4) aus einer Materialspenderrolle (7), einer auf die Arbeitsfläche (2) niederdrückbaren Anpreßrolle (9) und einer das Material querschneidenden Schneideinrichtung (19) umfaßt, wobei das Bandmaterial (1) von der Spenderrolle (7) vorzugsweise über Umlenkrollen (8) zur Anpreßrolle (9) läuft und die arbeitsflächenabgewandte Deckfolie (1b) des Materials beim Auflegen über die Anpreßrolle (9) und gegebenenfalls die arbeitsflächenzugewandte Deckfolie (1a) zwischen Spenderrolle (7) und Anpreßrolle (9) über eine Abnahmerolle (10) vom Band (1) abziehbar und jeweils auf eine Wickeltrommel (12) aufwickelbar sind, dadurch gekennzeichnet, daß die Schneideinrichtung (19) in Bandlegerichtung hinter der Anpreßrolle (9) liegt und die Legeeinheit (4) bei Legebeginn nach Aufsetzen der Andrückrolle (9) mit dem Band (1) auf der Arbeitsfläche (2) zuerst um einen dem Abstand zwischen Schneideinrichtung (19) und Anpreßrolle (9) angepaßten Legeweg zurückbewegbar ist, bevor der Legevorgang durch Vorfahren des Legeschlittens (3) bzw. der Legeeinheit (4) unter gleichzeitigem Bandabzug und Abrollen der Anpreßrolle beginnt.

2. Vorrichtung nach Anspruch 1, mit einem der Anpreßrolle (9) vorgeordneten, heb- und senkbaren Niederstreifer, vorzugsweise Niederstreiferbürste (20), dadurch gekennzeichnet, daß der Abstand zwischen Schneideinrichtung (19) und Anpreßrolle (9) etwa dem zwischen Niederstreifer (20) und Anpreßrolle (9) entspricht.

3. Vorrichtung nach Anspruch 1 oder 2, dadurch gekennzeichnet, daß die der Anpreßrolle (9) zugeordnete Wickeltrommel (12) und/oder die Spenderrolle (7) umkehrbare Drehantriebe (15; 14) aufweisen.

4. Vorrichtung nach einem der Ansprüche 1 - 3, dadurch gekennzeichnet, daß der Drehantrieb ( 15; 14) von der der Anpreßrolle (9) zugeordneten Wickeltrommel (12) und/oder von der Spenderrolle (7) im Sinne einer mit der Bewegung des Legeschlittens (3) synchronen Bandablegegeschwindigkeit ansteuerbar ist.

5. Vorrichtung nach einem der Ansprüche 1 - 4, dadurch gekennzeichnet, daß die Legeeinheit (4) mit einer in Bandlegerichtung hinter der Schneideinrichtung (19) angeordneten Werkstück-Markierungseinrichtung (21) ausgestattet ist.

FIG.1

FIG.2

FIG.3

FIG.4

Europäisches
Patentamt

# EUROPÄISCHER RECHERCHENBERICHT

Nummer der Anmeldung

**EP 90 89 0045**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 591 402   (EVANS ET AL) <br> * das ganze Dokument * <br> – – – | 1 | B 29 C 67/14 |
| A | EP-A-0 079 735   (WESTLAND) <br> * das ganze Dokument * <br> – – – – – | 1,2 | |

| | RECHERCHIERTE SACHGEBIETE (Int. Cl.5) |
|---|---|
| | B 65 H <br> B 29 C <br> B 26 D |

Der vorliegende Recherchenbericht wurde für alle Patentansprüche erstellt

| Recherchenort | Abschlußdatum der Recherche | Prüfer |
|---|---|---|
| Den Haag | 19 November 90 | EVANS A.J. |